# EUROPEAN PATENT SPECIFICATION

(11) **EP 1 296 520 B1**
(45) Date of publication and mention of the grant of the patent: **27.10.2010**
(21) Application number: 02020700.7
(22) Date of filing: 14.09.2002
(51) Int. Cl.: H04N 7/15

(54) **Method and system for multimedia video processing**
Vorrichtung und Verfahren für Multimedia- Videoverarbeitung
Méthode et système de traitement vidéo multimédia

(30) Priority: 14.09.2001 US 952339
(43) Date of publication of application: 26.03.2003
(73) Proprietor: Polycom Israel Ltd., 49310 Petach Tikva (IL)
(72) Inventor: Elbaz, Moshe, Kiriat Bialik , 27000 (IL); Eshkoli, Noam, Ra'anana , 43307 (IL); Yona, Ilan, Tel Aviv , 53411 (IL); Eisenberg Aviv, Be'er Sheva , 84682 (IL)
(74) Representative: Käck, Jürgen

(56) References cited:
- EP-A- 0 711 080
- US-A- 5 216 503
- US-A- 5 838 664

## Description

### RELATED APPLICATIONS

This application derives priority benefit from United States patent application serial number 09/952,339, filed September 14, 2001, which is a continuation-in-part of United States patent application serial number 09/506,861 filed 13 January 2000.

### FIELD OF THE INVENTION

The present invention relates to digital manipulations of video data like but not limited to: transcoding, mixing multiple streams, etc. wherein the input and the output streams are compressed.

### BACKGROUND

A Video Processing Device (VPD) like but not limited to a Multipoint Control Unit (MCU), a Multimedia Gateway, compressed video mixer is a device that manipulates compressed video input streams into a compressed video output stream.

An MCU receives multiple audio/video streams from various users' terminals, or codecs, and transmits to various users' terminals audio/video streams that correspond to the desired stream at the users' stations. In some cases, where the MCU serves as a switchboard, the transmitted stream to the end terminal is a simple stream originating from a single other user and may be transformed, when needed, to meet the receiver user endpoint needs. In other cases, it is a combined "conference" stream composed of several users' streams. In other cases when a transcoding is needed, the MCU modifies the output stream according to the needs (bit rate, frame rate, standard of compression, etc.) of its terminal.

Another example for a VPD is a Media Gateway; a Media Gateway (GW) is a node on the network that provides for real-time, two-way communications between Terminals on one network with other terminals on another network, or to another VPD.

Another example for a VPD is a digital compressed video mixer, which replaces an analog video mixer.

An important function of the VPD is to translate the input streams into the desired output streams from all and to all codecs. One aspect of this "translation" is a modification of the bit-rate between the original stream and the output stream. This rate matching modification can be achieved, for example, by changing the frame rate, the spatial resolution, or the quantization accuracy of the corresponding video. The output bit-rate, and thus the modified factor used to achieve the output bit rate, can be different for different users, even for the same input stream. For instance, in a four-party conference, one of the parties may be operating at 128 Kbps, another at 256 Kbps, and two others at T1. Each party needs to receive the transmission at the appropriate bit rate. The same principles apply to "translation," or transcoding between parameters that vary between codecs, e.g., different coding standards like H.261/H263; different input resolutions; and different maximal frame rates in the input streams.

Another use of the VPD can be to construct an output stream that combines several input streams. This option, sometimes called "compositing" or "continuous presence," allows a user at a remote terminal to observe, simultaneously, several other video sources. The choice of those sources can vary among different video channels. In this situation, the amount of bits allocated to each video source can also vary, and may depend on the on screen activity of the users, on the specific resolution given to the channel, or some other criterion.

All of this elaborate processing, transcoding and continuous presence processing, must be done under the constraint that the input streams are already compressed by a known compression method, usually based on a standard like but not limited to ITU's H.261 or H.263. These standards, as well as other video compression standards like MPEG, are generally based on a Discrete Cosine Transform ("DCT") process wherein the blocks of the image (video frame) are transformed, and the resulting transform coefficients are quantized and coded.

One prior art method first decompresses the video streams; performs the required combination, bridging and image construction either digitally or by other means; and finally re-compresses for transmission. This method requires high computation power, leads to degradation in the resulting video quality and suffers from large propagation delay. One of the most computation intensive portions of the prior art methods is the encoding portion of the operation where such things as motion vectors and DCT coefficients have to be generated so as to take advantage of spatial and temporal redundancies. For instance, to take advantage of spatial redundancies in the video picture, the DCT function can be performed. To generate DCT coefficients, each frame of the picture is broken into blocks and the discrete cosine transform function is performed upon each block. In order to take advantage of temporal redundancies, motion vectors can be generated. To generate motion vectors, consecutive frames are compared to each other in an attempt to discern pattern movement from one frame to the next. As would be expected, these computations require a great deal of computing power.

In order to reduce computation complexity and increase quality, others have searched for methods of performing such operations in a more efficient manner. Proposals have included operating in the transform domain on motion compensated, DCT compressed video signals by removing the motion compensation portion and compositing in the DCT transform domain.

In particular resources allocation of prior art VPDs is based on a straightforward approach, e.g. a video codec is allocated to a single user terminal although it may serve more than one.

Therefore, a method is needed for performing better video resources allocation.

Document WO 01/52538 A1 discloses a method and a system for compressed video processing. A multipoint control unit (MCU) facilitates communication between a plurality of endpoints. Each endpoint sends a compressed video signal and receives a compressed video signal. The MCU has a plurality of video input modules and a video output module. Each of the video input modules receives a video signal from one of the endpoints and generally decodes the data into a primary data stream and a secondary data stream. The video output module includes a rate control unit and a generalized encoder that receive the primary and secondary data streams for generally encoding to a compressed output stream for transmission to an endpoint.

### SUMMARY

The present invention is defined in claims 1 and 19, respectively.

Particular embodiments of the invention are set out in the dependent claims.

The present invention offers a variety of level of services (a selection of output stream configurations) for a session. A client may select the number of ports that will be used by the session. For example, a single port may multicast its compressed output video stream to all the destinations within a session, or plurality of ports, one per group of destinations that may use the same compressed video stream up to one port per each user.

### FIGURES

The construction designed to carry out the invention will hereinafter be described, together with other features thereof. The invention will be more readily understood from a reading of the following specification and by reference to the accompanying drawings forming a part thereof, wherein an example of the invention is shown and wherein:

Fig. 1 illustrates a system block diagram for implementation of an exemplary embodiment of the general function of this invention.

Fig. 2 illustrates a block diagram of an exemplary embodiment of a generalized decoder.

Fig. 3 illustrates a block diagram of another exemplary embodiment of a generalized decoder.

Fig. 4 illustrates a block diagram of an exemplary embodiment of a generalized encoder operating in the spatial domain.

Fig. 5 illustrates a block diagram of an exemplary embodiment of a generalized encoder operating in the DCT domain.

Fig. 6 illustrates an exemplary embodiment of a rate control unit for operation with an embodiment of the present invention.

Fig. 7 is a flow diagram depicting exemplary steps in the operation of a rate control unit.

Fig. 8 illustrates an exemplary embodiment of the present invention operating within an MCU wherein each endpoint has a single dedicated video output module and a plurality of dedicated video input modules.

Fig. 9 illustrates an exemplary embodiment of the present invention having a single video input module and a single video output module per logical unit.

### DETAILED DESCRIPTION

The description of the present invention refers to an MCU as an exemplary VPD. Those skilled in the art will appreciate that the present invention is not limited to an MCU and that it can be used in other VPDs such as, but not limited to, a Media Gateway, a compressed video mixer. In the case of devices other than an MCU, the endpoint can be any source of compressed video stream or any destination of a compressed video stream, and any session having a compressed video manipulation may be substituted where a video-conference is recited.

An MCU is used where multiple users at endpoint codecs communicate in a simultaneous video-conference. A user at a given endpoint may simultaneously view multiple endpoint users at his discretion. In addition, the endpoints may communicate at differing data rates using different coding standards, so the MCU facilitates transcoding of the video signals between these endpoints.

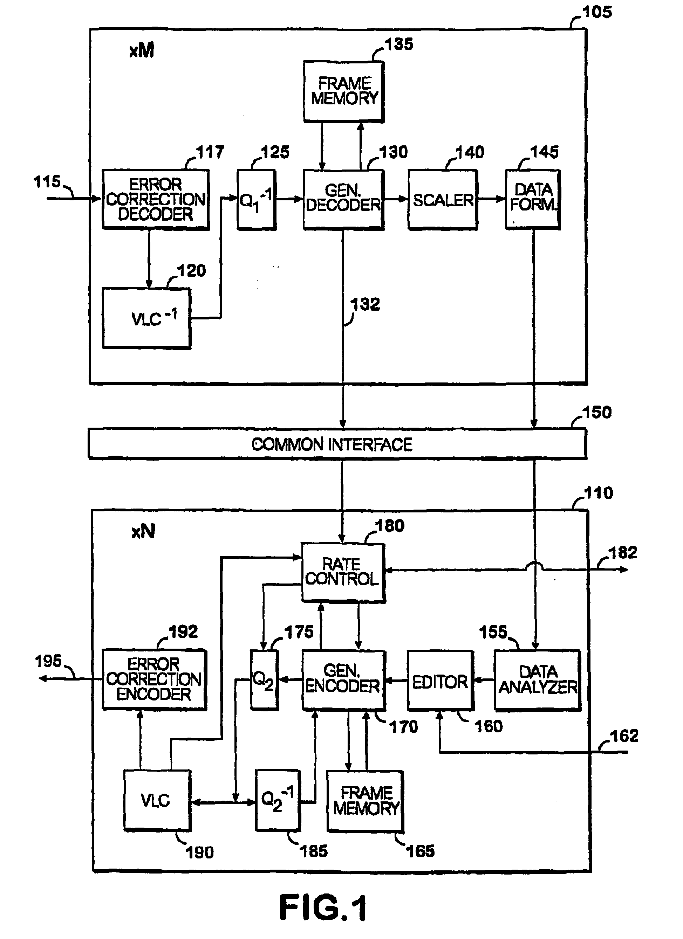

Fig. 1 illustrates a system block diagram for implementation of an exemplary embodiment of the general function of the invention. In an MCU, compressed video input **115** from a first endpoint codec is brought into a video input module **105**, routed through a common interface **150**, and directed to a video output module **110** for transmission as compressed video output **195** to a second endpoint codec. The common interface **150** may include any of a variety of interfaces, such as shared memory, ATM bus, TDM bus, switching and direct connection. The invention contemplates that there will be a plurality of endpoints enabling multiple users to participate in a video-conference. For each endpoint, a video input module **105** and a video output module **110** may be assigned. Common interface **150** facilitates the transfer of video information between multiple video input modules **105** and multiple video output modules **110**.

Compressed Video **115** is sent to error correction block decoder **117** within video input module **105.** Error correction decoder block **117** takes the incoming compressed video **115** and removes the error correction code. An example of an error correction code is BCH coding. This error correction block **117** is optional and may not be needed with certain codecs.

The video stream is next routed to the variable length unencoder, VLC⁻¹ **120,** for decoding the variable length coding usually present within the compressed video input stream. Depending on the compression used (H.261, H.263, MPEG, etc.) it recognizes the stream header markers and the specific fields associated with the video frame structure. Although the main task of the VLC⁻¹ **120** is to decode this variable length code and prepare the data for the following steps, VLC⁻¹ **120** may take some of the information it receives, e.g., stream header markers and specific field information, and pass this information on to later function blocks in the system.

The video data of the incoming stream contains quantized DCT coefficients. After decoding the variable length code, Q⁻¹ **125** dequantizes the representation of these coefficients to restore the numerical value of the DCT coefficients in a well known manner. In addition to dequantizing the DCT coefficients, Q⁻¹ **125** may pass through some information, such as the step size, to other blocks for additional processing.

Generalized decoder **130** takes the video stream received from the VLC⁻¹ **120** through Q⁻¹ **125** and based on the frame memory **135** content, converts it into "generalized decoded" frames (according to the domain chosen for transcoding). The generalized decoder **130** then generates two streams; a primary data stream and a secondary data stream. The primary data stream can be either frames represented in the image (spatial) domain, frames represented in the DCT domain, or some variation of these, e.g., error frames. The secondary data stream contains "control" or "side information" associated with the primary stream and may contain motion vectors, quantizer identifications, coded/uncoded decisions, filter/non-filter decisions, frame type, resolution and other information that would be useful to the encoding of a video signal.

For example, for every macro block, there may be an associated motion vector. Reuse of the motion vectors can reduce the amount of computations significantly. Quantizer values are established prior to the reception of encoded video **11**5. Reuse of quantizer values, when possible, can allow generalized encoder **170** to avoid quantization errors and send the video coefficients in the same form as they entered the generalized decoder **130.** This configuration avoids quality degradation. In other cases, quantizer values may serve as first guesses during the reencoding process. Statistical information can be sent from the generalized decoder **130** over the secondary data stream. Such statistical information may include data about the amount of information within each macroblock of an image. In this way, more bits may later be allocated by rate control unit **180** to those macroblocks having more information.

Because filters may be used in the encoding process, extraction of filter usage information in the generalized decoder **130** also can reduce the complexity of processing in the generalized encoder **170.** While the use of filters in the encoding process is a feature of the H.261 standard, it will be appreciated that the notion of the reuse of filter information should be read broadly to include the reuse of information used by other artifact removal techniques.

In addition, the secondary data stream may contain decisions made by processing the incoming stream, such as image segmentation decisions and camera movements identification. Camera movements include such data as pan, zoom and other general camera movement information. By providing this information over the secondary data stream, the generalized encoder **170** may make a better approximation when re-encoding the picture by knowing that the image is being panned or zoomed.

This secondary data stream is routed over the secondary (Side Information) channel **132** to the rate control unit **180** for use in video output block **110**. Rate control unit **180** is responsible for the efficient allocation of bits to the video stream in order to obtain maximum quality while at the same time using the information extracted from generalized decoder **130** within the video input block **105** to reduce the total computations of the video output module **110.**

The scaler **140** takes the primary data stream and scales it. The purpose of scaling is to change the frame resolution in order to later incorporate it into a continuous presence frame. Such a continuous presence frame may consist of a plurality of appropriately scaled frames. The scaler **140** also applies proper filters for both decimation and picture quality preservation. The scaler **140** may be bypassed if the scaling function is not required in a particular implementation or usage.

The data formatter **145** creates a representation of the video stream. This representation may include a progressively compressed stream. In a progressively compressed stream, a progressive compression technique, such as wavelet based compression, represents the video image in an increasing resolution pyramid. Using this technique, the scaler **140** may be avoided and the data analyzer and the editor **160,** may take from the common interface only the amount of information that the editor requires for the selected resolution.

The data formatter **145** facilitates communication over the common interface and assists the editor **160** in certain embodiments of the invention. The data formatter **145** may also serve to reduce title bandwidth required of the common interface by compressing the video stream. The data formatter **145** may be bypassed if its function is not required in a particular embodiment.

When the formatted video leaves data formatter **145** of the video input block, it is routed through common interface **150** to the data analyzer **155** of video output block **110.** Routing may be accomplished through various means including busses, switches or memory.

The data analyzer **155** inverts the representation created by the data formatter **145** into a video frame structure. In the case of progressive coding, the data analyzer **155** may take only a portion of the generated bit-stream to create a reduced resolution video frame. In embodiments where the data formatter **145** is not present or is bypassed, the data analyzer **155** is not utilized.

After the video stream leaves the data analyzer **155**, the editor **160** can generate the composite video image. It receives a plurality of video frames; it may scale the video frame (applying a suitable filter for decimation and quality), and/or combine various video inputs into one video frame by placing them inside the frame according to a predefined or user defined screen layout scheme. The editor **160** may receive external editor inputs **162** containing layout preferences or text required to be added to the video frame, such as speech translation, menus, or endpoint names. The editor **160** is not required and may be bypassed or not present in certain embodiments not requiring the compositing function.

The rate control unit **180** controls the bit rate of the outgoing video stream. The rate control operation is not limited to a single stream and can be used to control multiple streams in an embodiment comprising a plurality of video input modules **105.** The rate control and bit allocation decisions are made based on the activities and desired quality for the output stream. A simple feedback mechanism that monitors the total amount of bits to all streams can assist in these decisions. In effect, the rate control unit becomes a statistical multiplexer of these streams. In this fashion, certain portions of the video stream may be allocated more bits or more processing effort.

In addition to the feedback from generalized encoder **170**, feedback from VLC **190**, and side information from the secondary channel **132,** as well as external input **182** all may be used to allow a user to select certain aspects of signal quality. For instance, a user may choose to allocate more bits of a video stream to a particular portion of an image in order to enhance clarity of that portion. The external input **182** is a bi-directional port to facilitate communications from and to an external device.

In addition to using the side information from the secondary channel **132** to assist in its rate control function, rate control unit **180** may, optionally, merely pass side information directly to the generalized encoder **170**. The rate control unit **180** also assists the quantizer **175** with quantizing the DCT coefficients by identifying the quantizer to be used.

Generalized encoder **170** basically performs the inverse operation of the generalized decoder **130.** The generalized encoder **170** receives two streams: a primary stream, originally generated by one or more generalized decoders, edited and combined by the editor **160**; and a secondary stream of relevant side information coming from the respective generalized decoders, Since the secondary streams generated by the generalized decoders are passed to the rate-control function **180,** the generalized encoder **170** may receive the side information through the rate control function **180** either in its original form or after being processed. The output of the generalized encoder **170** is a stream of DCT coefficients and additional parameters ready to be transformed into a compressed stream after quantization and VLC.

The output DCT coefficients from the generalized encoder **170** are quantized by Q₂ **175,** according to a decision made by the rate control unit **180.** These coefficients are fed back to the inverse quantizer block Q₂⁻¹ **185** to generate, as a reference, a replica of what the decoder at the endpoint codec would obtain, This reference is typically the sum of the coefficients fed back to the inverse quantizer block and the content of the frame memory **165**. This process reduces error propagation. Now, depending on the domain used for encoding, the difference between the output of the editor **160** and the motion compensated reference (calculated either in the DCT or spatial domain) is encoded into DCT coefficients, which are the output of the generalized encoder **170.**

The VLC **190**, or variable length coder, removes the remaining redundancies from the quantized DCT coefficients stream by using lossless coding tables defined by the chosen standard (H.261, H.263). VLC **190** also inserts the appropriate motion vectors, the necessary headers and synchronization fields according to the chosen standard. The VLC **190** also sends to the Rate Control Unit **180** the data on the actual amount of bits used after variable length coding.

The error correction encoder **192** next receives the video stream and inserts the error correction code. In some cases this may be BCH coding. This error correction encoder **192** block is optional and, depending on the codec, may be bypassed. Finally, it sends the stream to the end user codec for viewing.

In order to more fully describe aspects of the invention, further detail on the generalized decoder **130** and the generalized encoder **170** follows.

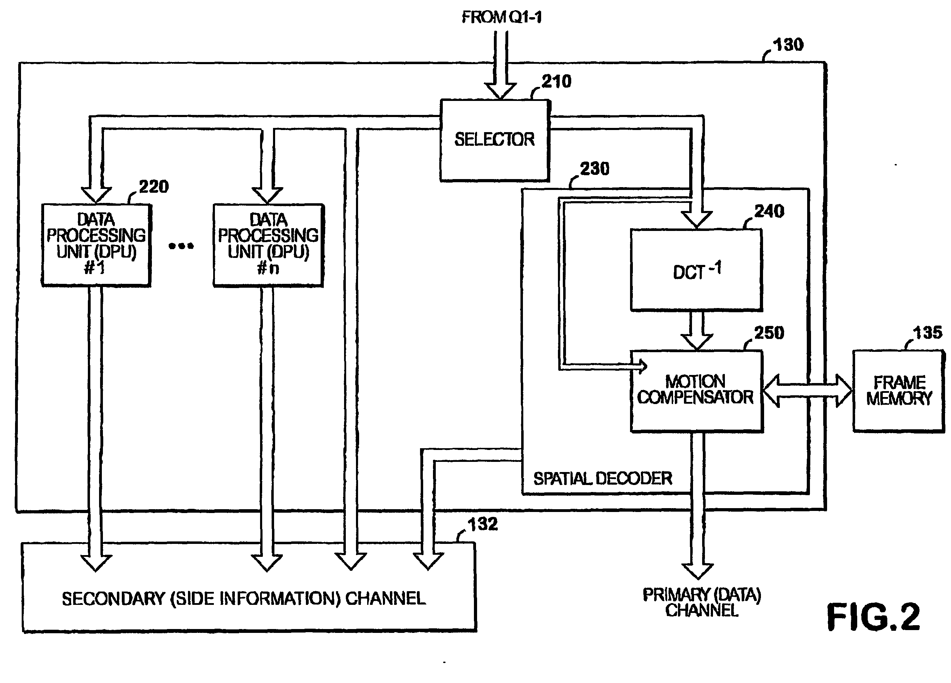

Fig. 2 illustrates a block diagram of an exemplary embodiment of a generalized decoder **130.** Dequantized video is routed from the dequantizer **125** to the Selector **210** within the generalized decoder **130.** The Selector **210** splits the dequantized video stream, sending the stream to one or more data processors **220** and a spatial decoder **230**. The data processors **220** calculate side information, such as statistical information like pan and zoom, as well as quantizer values and the like, from the video stream. The data processors **220** then pass this information to the side information channel **132.** A spatial decoder **230,** in conjunction with frame memory **135** (shown in Fig. 1) fully or partially decodes the compressed video stream. The DCT decoder **240**, optionally, performs the inverse of the discrete cosine transfer function. The motion compensator **250,** optionally, in conjunction with frame memory **135** (shown in Fig. 1) uses the motion vectors as pointers to a reference block in the reference frame to be summed with the incoming residual information block. The fully or partially decoded video stream is then sent along the primary channel to the scaler **140,** shown in Fig. 1, for further processing. Side information is transferred from spatial decoder **230** via side channel **132** for possible reuse at rate control unit **180** and generalized encoder **170.**

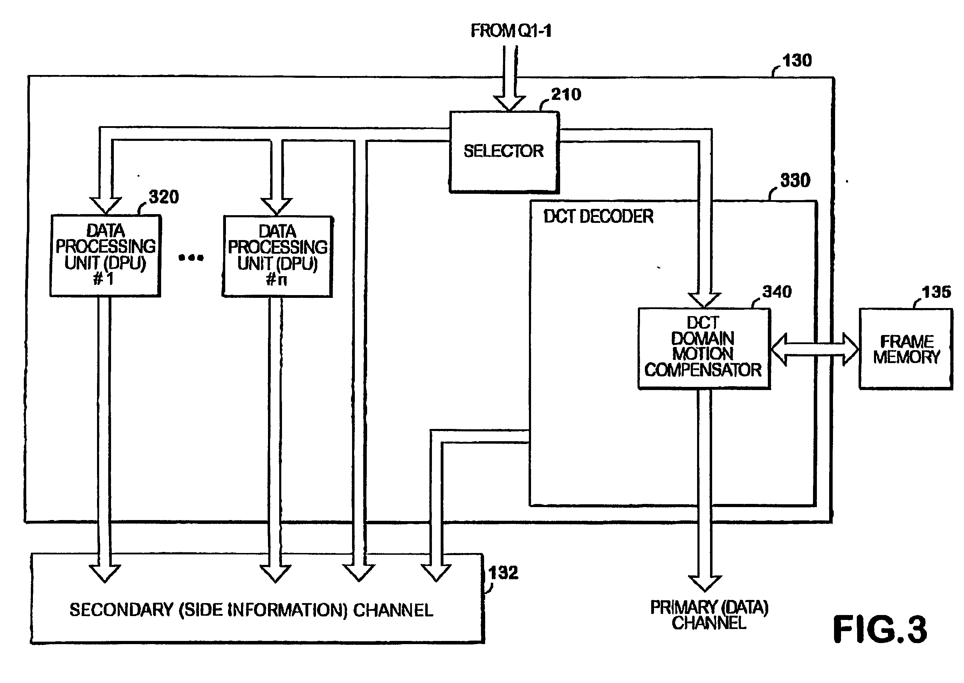

Fig. 3 illustrates a block diagram of another exemplary embodiment of a generalized decoder **130.** Dequantized video is routed from dequantizer **125** to the selector **210** within generalized decoder **130.** The selector **210** splits the dequantized video stream sending the stream to one or more data processors **320** and DCT decoder **330.** The data processors **320** calculate side information, such as statistical information like pan and zoom, as well as quantizer values and the like, from the video stream. The data processors **320** then pass this information through the side information channel **132.** The DCT decoder **330** in conjunction with the frame memory **135,** shown in Fig. 1, fully or partially decodes the compressed video stream using a DCT domain motion compensator **340** which performs, in the DCT domain, calculations needed to sum the reference block pointed to by the motion vectors in the DCT domain reference frame with the residual DCT domain input block. The fully or partially decoded video stream is sent along the primary channel to the scaler **140,** shown in Fig. 1, for further processing. Side information is transferred from the DCT decoder **330** via the side channel **132** for possible reuse at the rate control unit **180** and the generalized encoder **170.**

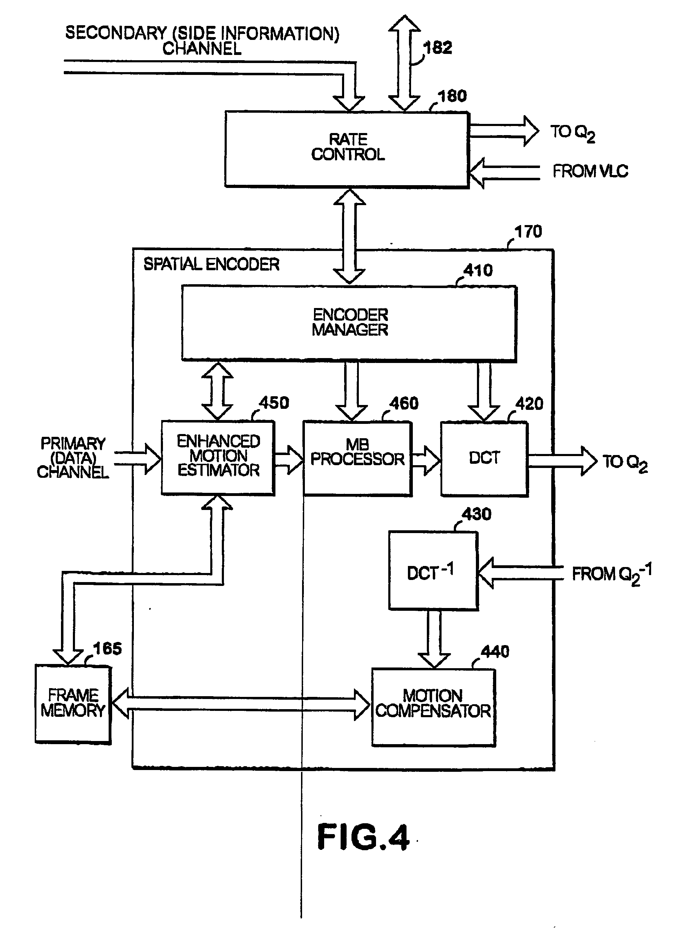

Fig. 4 illustrates a block diagram of an exemplary embodiment of a generalized encoder **170** operating in the spatial domain. The generalized encoder's first task is to determine the motion associated with each macroblock of the received image over the primary data channel from the editor **160.** This is performed by the enhanced motion estimator **450**. The enhanced motion estimator **450** receives motion predictors that originate in the side information, processed by the rate control function **180** and sent through the encoder manager **410** to the enhanced motion estimator **450.** The enhanced motion estimator **450** compares, if needed, the received image with the reference image that exists in the frame memory **165** and finds the best motion prediction in the environment in a manner well known to those skilled in the art. The motion vectors, as well as a quality factor associated with them, are then passed to the encoder manager **410.** The coefficients are passed on to the MB processor **460.**

The MB, or macroblock, processor **460** is a general purpose processing unit for the macroblock level wherein one of its many functions is to calculate the difference MB. This is done according to an input coming from the encoder manager **410**, in the form of indications whether to code the MB or not, whether to use a deblocking filter or not, and other video parameters. In general responsibility of the MB processor **460** is to calculate the macroblock in the form that is appropriate for transformation and quantization. The output of the MB processor **460** is passed to the DCT coder **420** for generation of the DCT coefficients prior to quantization.

All these blocks are controlled by the encoder manager **410.** It decides whether to code or not to code a macroblock; it may decide to use some deblocking filters; it gets quality results from the enhanced motion estimator **450**; it serves to control the DCT coder **420;** and it serves as an interface to the rate-control block **180.** The decisions and control made by the encoder manager **410** are subject to the input coming from the rate control block **180.**

The generalized encoder **170** also contains a feedback loop. The purpose of the feedback loop is to avoid error propagation by reentering the frame as seen by the remote decoder and referencing it when encoding the new frame. The output of the encoder which was sent to the quantization block is decoded back by using an inverse quantization block, and then fed back to the generalized encoder **170** into the inverse DCT **430** and motion compensation blocks **440**, generating a reference image in the frame memory **165**.

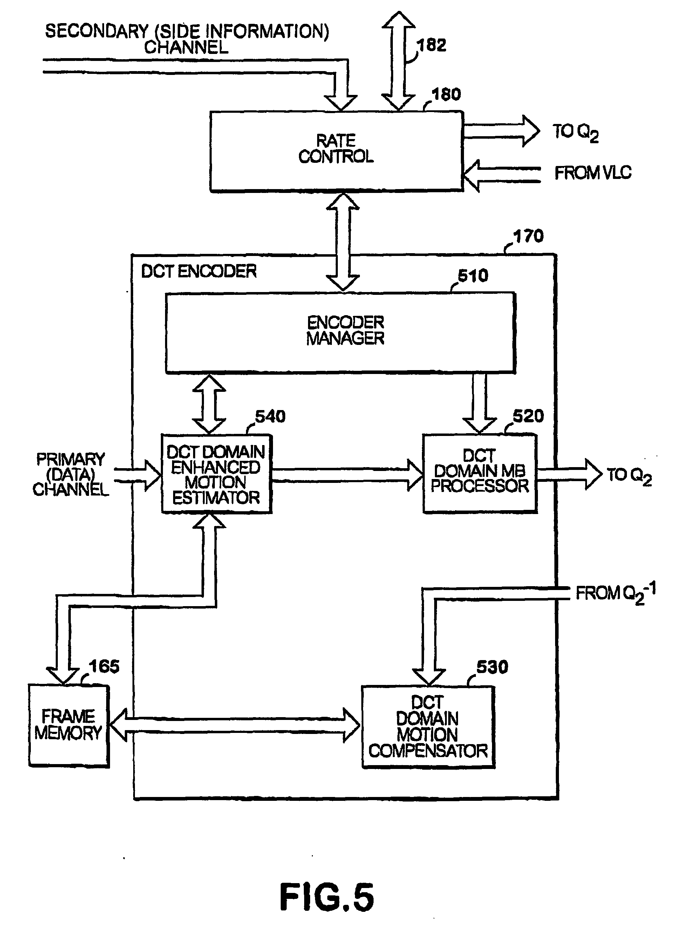

Fig. 5 illustrates a block diagram of a second exemplary embodiment of a generalized encoder **170** operating in the DCT domain. The generalized encoder's first task is to determine the motion associated with each macroblock of the received image over the primary data channel from the editor **160.** This is performed by the DCT domain enhanced motion estimator **540.** The DCT domain enhanced motion estimator **540** receives motion predictors that originate in the side information channel, processed by rate control function **180** and sent through the encoder manager **510** to the DCT domain enhanced motion estimator **540**. It compares, if needed, the received image with the DCT domain reference image that exists in the frame memory **165** arid finds the best motion prediction in the environment. The motion vectors, as well as a quality factor associated with them, are then passed to the encoder manager **510**. The coefficients are passed on to the DCT domain MB processor **520.**

The DCT domain macroblock, or MB, processor **520** is a general purpose processing unit for the macroblock level, wherein one of its many functions is to calculate the difference MB in the DCT domain. This is done according to an input coming from the encoder manager **510**, in the form of indications whether to code the MB or not, to use a deblocking filter or not, and other video parameters. In general, the DCT domain MB processor **520** responsibility is to calculate the macroblock in the form that is appropriate for transformation and quantization.

All these blocks are controlled by the encoder manager **510**. The encoder manager **510** decides whether to code or not to code a macroblock; it may decide to use some deblocking filters; it gets quality results from the DCT domain enhanced motion estimator **540**; and it serves as an interface to the rate control block **180.** The decisions and control made by the encoder manager **510** are subject to the input coming from the rate control block **180.**

The generalized encoder **170** also contains a feedback loop. The output of the encoder which was sent to the quantization block is decoded back, by using an inverse quantization block and then fed back to the DCT domain motion compensation blocks **530,** generating a DCT domain reference image in the frame memory **165**.

While the generalized encoder **170** has been described with reference to a DCT domain configuration and a spatial domain configuration, it will be appreciated by those skilled in the art that a single hardware configuration may operate in either the DCT domain or the spatial domain. This invention is not limited to either the DCT domain or the spatial domain but may operate in either domain or in the continuum between the two domains.

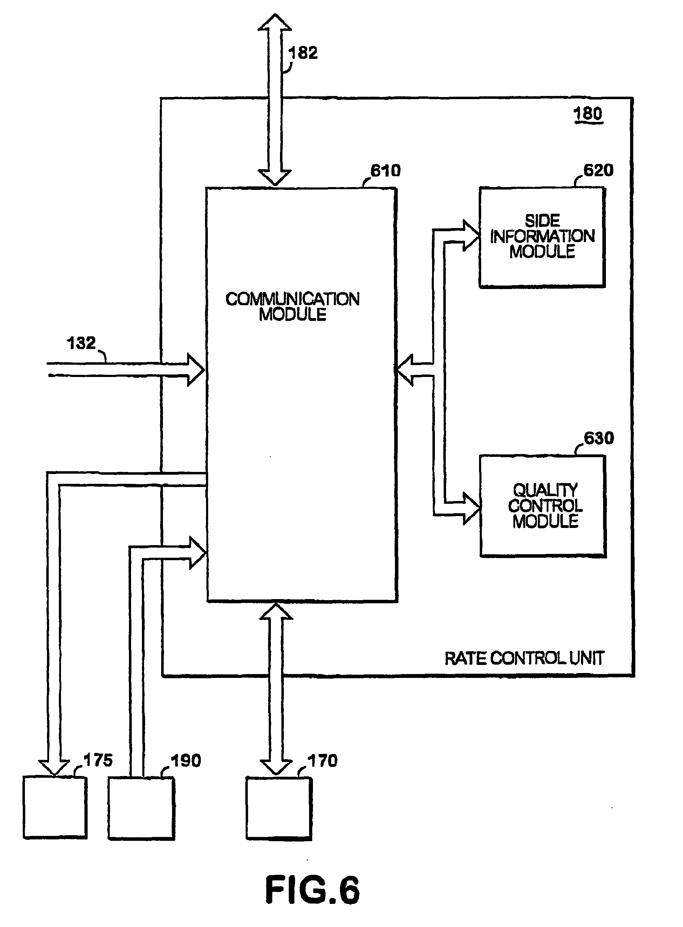

Fig. 6 illustrates an exemplary embodiment of a rate control unit for operation with an embodiment of the present invention. Exemplary rate control unit **180** controls the bit rate of the outgoing video stream. As was stated previously, the rate control operation can apply joint transcoding of multiple streams. Bit allocation decisions are made based on the activities and desired quality for the various streams assisted by a feedback mechanism that monitors the total amount of bits to all streams. Certain portions of the video stream may be allocated more bits or more processing time.

The rate control unit **180** comprises a communication module **610**, a side information module **620**, and a quality control module **630**. The communication module **610** interfaces with functions outside of the rate control unit **180**. The communication module **610** reads side information from the secondary channel **132,** serves as a two-way interface with the external input **182,** sends the quantizer level to a quantizer **175**, reads the actual number of bits needed to encode the information from the VLC **190**, and sends instructions and data and receives processed data from the generalized encoder **170.**

The side information module **620** receives the side information from all appropriate generalized decoders from the communication module **610** and arranges the information for use in the generalized encoder. Parameters generated in the side information module **620** are sent via communication module **610** for further processing in the general encoder **170**.

The quality control module **630** controls the operative side of the rate control block **180.** The quality control module **630** stores the desired and measured quality parameters, Based on these parameters, the quality control module **630** may instruct the side information module **620** or the generalized encoder **170** to begin certain tasks in order to refine the video parameters.

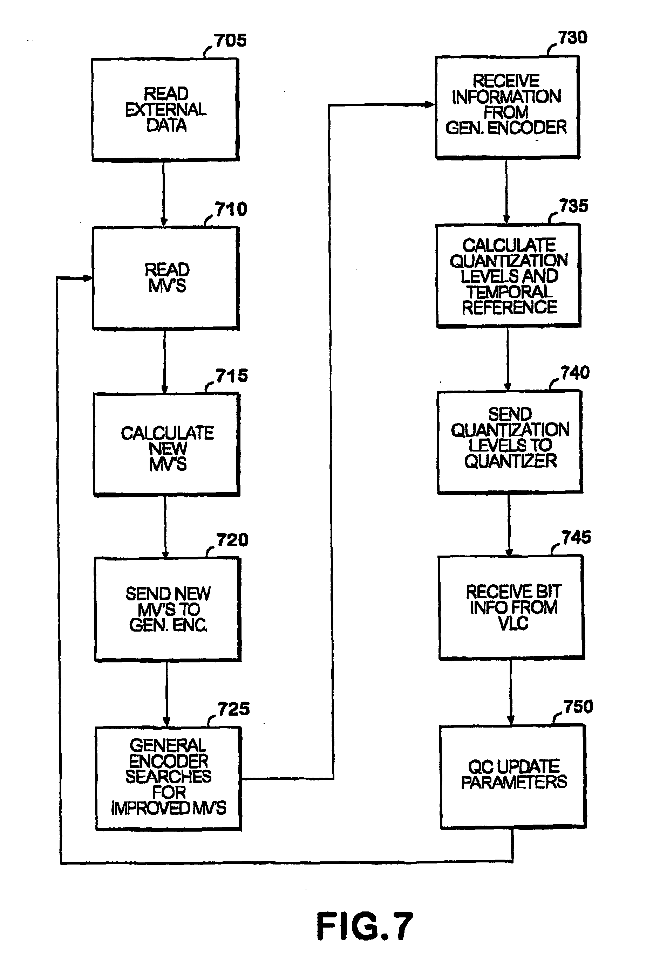

Further understanding of the operation of the rate control module **180** will be facilitated by referencing the flowchart shown in Fig. 7. While the rate control unit **180** can perform numerous functions, the illustration of Fig. 7 depicts exemplary steps in the operation of a rate control unit such as rate control unit **180**. The context of this description is the reuse of motion vectors; in practice those skilled in the art will appreciate that other information can be exploited in a similar manner.

At step **705,** the communications module **610** within the rate control unit **180** reads external instructions for the user desired picture quality and frame rate. At step **710,** communications module **610** reads the motion vectors of the incoming frames from all of the generalized decoders that are sending picture data to the generalized encoder. For example, if the generalized encoder is transmitting a continuous presence image from six incoming images, motion vectors from the six incoming images are read by the communications module **610**. Once the motion vectors are read by the communications module **610**, the motion vectors are transferred to the side information module **620**.

At step **715,** the quality control module **630** may instruct the side information module **620** to calculate new motion vectors using the motion vectors that were retrieved from the new generalized decoders and stored, at step **710,** in the side information module **620.** The new motion vectors may have to be generated for a variety of reasons including reduction of frame hopping and down scaling. In addition to use in generating new motion vectors, the motion vectors in the side information module are used to perform error estimation calculations with the result being used for further estimations or enhanced bit allocation. In addition, the motion vectors give an indication of a degree of movement within a particular region of the picture, or region of interest so that the rate control unit **180** can allocate more bits to blocks in that particular region.

At step **720**, the quality control module **630** may instruct the side information module **620** to send the new motion vectors to the generalized encoder via the communications module **610.** The generalized encoder may then refine the motion vectors further. Alternatively, due to constraints in processing power or a decision by the quality control module **630** that refinement is unnecessary, motion vectors may not be sent. At step **725,** the generalized encoder will search for improved motion vectors based on the new motion vectors. At step **730**, the generalized encoder will return these improved motion vectors to the quality control module **630** and will return information about the frame and/or block quality.

At step **735,** the quality control module **630** determines the quantization level parameters and the temporal reference and updates the external devices and user with this information. At step **740,** the quality control module **630** sends the quantization parameters to the quantizer **175.** At step **745,** the rate control unit **180** receives the bit information from the VLC **190** which informs the rate control unit **180** of the number of bits used to encode each frame or block. At step **750,** in response to this information, the quality control module **630** updates its objective parameters for further control and processing returns to block **710.**

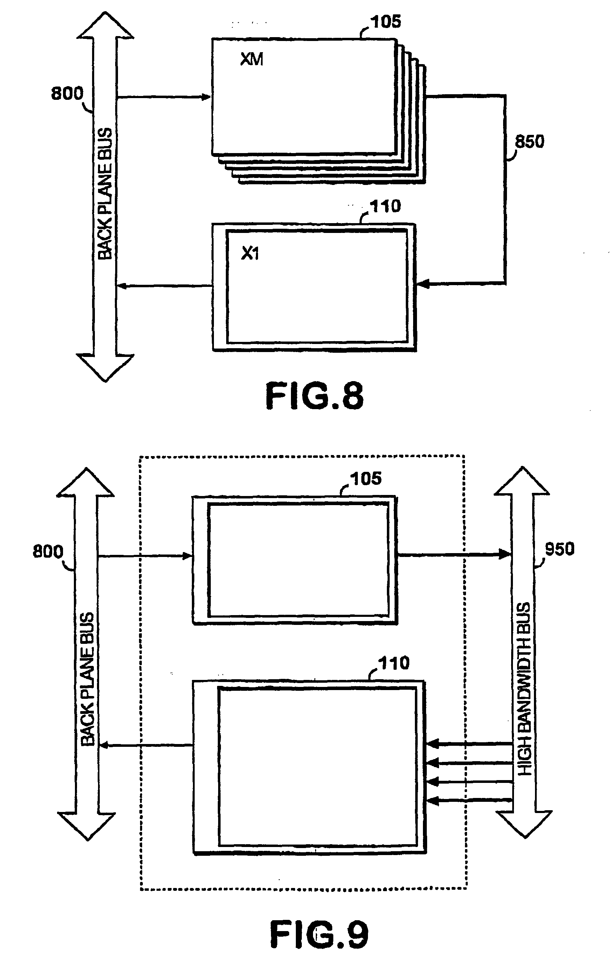

The invention described above may be implemented in a variety of hardware configurations. Two such configurations are the "fat port" configuration generally illustrated in Fig. 8 and the "slim port" configuration generally illustrated in Fig. 9. These two embodiments are for illustrative purposes only, and those skilled in the art will appreciate the variety of possible hardware configurations implementing this invention.

Fig. 8 illustrates an exemplary embodiment of the present invention operating within an MCU wherein each endpoint has a single dedicated video output module **110** and a plurality of dedicated video input modules **105**. In this so called "fat port" embodiment, a single logical unit applies all of its functionality for a single endpoint, Incoming video streams are directed from the Back Plane Bus **800** to a plurality of video input modules **105.** Video inputs from the Back Plane Bus **800** are assigned to a respective video input module **105.** This exemplary embodiment is more costly than the options which follow because every endpoint in an *n* person conference requires *n*-1 video input modules **105** and one video output module **110.** Thus, a total of *n* • (*n*-1) video input modules and *n* video output modules are needed. While costly, the advantage is that end users may allocate the layout of their conference to their liking. In addition to this "private layout" feature, having all of the video input modules and the video output module on the same logical unit permits a dedicated data pipe **850** that resides within the logical unit to facilitate increased throughput. The fact that this data pipe **850** is internal to a logical unit eases the physical limitation found when multiple units share the pipe. The dedicated data pipe **850** can contain paths for both the primary data channel and the side information channel.

Fig. 9 illustrates an exemplary embodiment of the present invention with a single video input module and a single video output module per logical unit. In an MCU in this "Slim Port' configuration, a video input module **105** receives a single video input stream from Back Plane Bus **800**. After processing, the video input stream is sent to common interface **950** where it may be picked up by another video output module for processing. Video output module **110** receives multiple video input streams from the common interface **950** for compilation in the editor and output to the Back Plane Bus **800** where it will be routed to an end user codec. In this embodiment of the invention, the video output module **110** and video input module **105** are on the same logical unit and may be dedicated to serving the input/output video needs of a single end user codec, or the video input module **105** and the video output module **110** may be logically assigned as needed. In this manner, resources may be better utilized; for example, for a video stream of an end user that is never viewed by other end users, there is no need to use a video input module resource.

The configuration where the video input module **105** and the video output module **110** may be logically assigned as needed as a separate input port or output port respectively is referred as "Distributed Port" configuration. A video input module **105**, is referred as an input port **105** and a video output module **110,** is referred as an output port **110.**

Each input port **105** may be assigned to a participant. The assignment can be for the whole duration of the conference or it can be dynamically changed during the conference from one participant to the other. Each output port **110** may be assigned to a participant or group of participants or to all the participants in the conference. The logical connection of certain input ports and certain output ports to the same conference is temporary for said conference, in another conference the same input port may be connected to other output ports.

The video input port **105** grabs the appropriate input compressed video stream from the Back Plane Bus **800** according to the momentary assignment from the host.

After processing, the input port sends the decoded video data to the common interface **150** from where it may be grabbed by one or more video output ports **110** for additional processing. The output port performs the same functionality as the output module, as described above in reference to Fig. 1, and transfer the compressed output signal to the appropriate, one or more, endpoints via the back plane **800.**

In a distributed configuration, the video output port **110** and video input port **105** are separate logical units and may be dedicated to serve the input/output video needs of different codecs of one or more endpoints. The video input port **105** and the video output port **110** may be logically assigned as needed. In this manner, resources may be better utilized. Moreover, in a case where a video stream of an end user is never viewed by other end users, there is no need to use a video input port for processing its compressed video.

Usually in multipoint conferences several clusters of endpoints with the same communication mode can be found. Communication mode is a set of parameters that is used by an endpoint while connecting to a video-conference, e.g. bit rate, resolution, frame rate, compression standards, layout, etc.

In such environmental a single output port may serve several endpoints of the same cluster without reducing quality or functionality of the conference in comparison to the case where an output port is allocated per each participant.

For example, in a conference with 20 participants using a lX2 (two way) layout and three communication clusters, the conference may use only 9 output ports instead of 20 output ports, according to the following exemplary method for calculating the amount of necessary ports. The number of output ports, or more generally Output Resources (OR), is equal to the minimum of the number of participants (P) in the conference and the number of rectangles in the layout (L) plus one (2+1=3) times the number of communication clusters (C), OR=Minimum {P, (L+1)*C}.

In the above case, only 3 input ports [will be] are used. Two are used to generate the layout of the conference, and one is used to generate the layout of the active participants. An exemplary method for selecting the amount of Input Resources (IR) may use the formula, IR= Minimum {P, (L+1)}.

The present invention is directed to a new method for allocating video resources to a conference with a known number of participants according to the conference profile defined by the conference moderator. This method is called "Level of Service."

The video resources include the amount or number of input ports and output ports that will be assigned to the conference.

The profile of a conference may include parameters such as, but not limited to, bit rate, resolution, compression standards, types of layouts, and the amount or number of different layouts in the conference.

The number of video resources that can be allocated to a conference can be varied from one input port and one output port for the entire conference, up to one input port and one output port for each participant.

For example, the MCU may offer a selection of the appropriate service levels according to the conference requirements. The offering can be based on the response of the conference moderator to a form that defines the profile of the conference. Then, the MCU processes the profile of the conference and may offer several levels of service. The following are a few examples:

In the case of a conference of 9 participants with terminals using the same communication mode, three levels of service may be offered, which are listed below.

Level 1 offers a 2X2 layout and uses four input ports and a single output port for the entire conference. The host routs the compressed video from each participant of the selected 4 active participants to the appropriate input port, which is selected from the four input ports, and multicasts the compressed video output from the output port to all participants. All participants see the same layout, and each active participant sees herself or himself and the other three participants.

Level 2 is an enhancement of level 1 in that five participants are allowed, and the active participants do not see themselves. Therefore, the resource allocation for level 2 is 5 input ports and 5 output ports.

In level 3, all the participants can be viewed, and each participant can select his or her layout. In this level of service, 9 input ports and 9 output ports are used; one input port and one output port are used for each participant.

Those skilled in the art will appreciate that those three levels are given by way of example, other numbers or other types of levels may be used.

The moderator then selects the appropriate level of service and that selection gives the moderator influence on the resource allocation for the conference. The offering of the level of service may be associated with a cost and may bind performance to price.

Another exemplary method of offering a level of service may provide an output port for each type of communication mode; the total number of output ports for this level of service is the same as the number of communication clusters in the conference. Each output port is configured to a different cluster of encoded video stream, according to the compression standard, the bit rate, the desired layout, and the resolution, for example. Those video output ports **110** grab multiple video input streams, according to the layout, from the common interface **150,** for compilation in the output port and broadcast to the Back Plane Bus **800**, where the compiled video stream will be grabbed by at least one end user or endpoint that has a terminal that matches the type of output stream.

An MCU using the fat port configuration may also offer a level of service functionality offering several levels of service, because the fat port comprises a plurality of input modules and one output module. For example, a single fat port can be assigned to a continuous presence conference in which all the participants use the same compression standard and the same bit rate. In such a case, one input module is assigned to each endpoint that is visible in the conference. The compressed input signals of the relevant endpoints are transferred to the appropriate input modules of the relevant fat port. The fat port processes the input streams from those endpoints and transfers the compressed output signals to the appropriate end points. The operation of the fat port is described in relation to Fig. 8. The level of service in the conference of Fig. 8 is limited to a single layout having endpoints with the same bit rate, the same resolution, and the same compression standard.

Those skilled in the art will appreciate that in cases of conferences with more than one layout or more than one communication cluster, more expensive levels of service can be offered (e.g., the conference moderator may be offered more than one fat port to a conference, one fat port for each layout and/or for each type of endpoint up until the most expensive level of service in which every endpoint receives its compressed video from its own fat port with a layout and bit rate tailored for the endpoint).

Because of the reduction in digital processing caused by the present architecture, including this reuse of video parameters, the video input modules **105** and the video output modules **110** can use microprocessors like Digital Signal Processors (DSPs), which can be significantly more versatile and less expensive than the hardware required for prior art MCUs. Prior art MCUs that perform full, traditional decoding and encoding of video signals typically require specialized video processing chips. These specialized video processing chips are expensive, "black box" chips that are not amenable to rapid development. Their specialized nature means that they have a limited market that does not facilitate the same type of growth in speed and power as has been seen in the microprocessor and digital signal processor ("DSP") field. By reducing the computational complexity of the MCU, this invention facilitates the use of fast, rapidly evolving DSPs to implement the MCU features.

From the foregoing description, it will be appreciated that the present invention describes a method of and apparatus for performing operations on a compressed video stream and offering of a new method of video resources allocation. The present invention has been described in relation to particular embodiments which are intended in all respects to be illustrative rather than restrictive. Accordingly, the scope of the present invention is described by the appended claims and supported by the foregoing description.

## Claims

1. A method for allocating video resources to a multipoint video conference, the method comprising:
defining a conference profile by a conference moderator, the conference profile comprising, in particular, one or more of bit rate, resolution, compression standards, types of layouts, and the amount or number of different layouts in the conference;
offering by a video processing device a selection of several levels of service to the conference moderator on the basis of the conference profile, wherein different levels of service require different amounts of video resources, wherein the levels of service determine the number of input ports (105) and the number of output ports (110) used for the entire multipoint video conference;
selecting a level of service by the conference moderator; and
assigning by the video processing device one or more video resources to the multipoint video conference based on the defined conference profile and the selected level of service,
wherein the one or more video resources is selected from the group consisting of input port (105), output port (110), slim port and fat port, the slim port comprising a single input module and a single output module, the fat port comprising a plurality of input modules and a single output module.

2. The method of claim 1 further comprising:
routing a compressed video input signal of an input endpoint to an input module (105);
processing the compressed video input signal using the input module (105);
routing decoded video data of a set of input modules (105) to output modules (110);
processing the decoded video data to form a single compressed video output signal using one output module of the output modules (110); and
transferring the single compressed video output signal to a receiving endpoint.

3. The method of claim 1, wherein the offering of a selection of levels of service takes into consideration at least one parameter selected from a group of parameters consisting of: how many different compression standards are involved in the video conference, how many different resolutions are involved in the video conference, which type of configuration is used in the video conference, how many types of configurations are in use in the video conference, how many different bit rates are in use in the video conference, and how many different frame rates are in use in the video conference.

4. The method of claim 1, wherein the assigning further comprises:
assigning one output port (110) for each requested compression standard thereby binding a resources allocation associated with a video processing device with needs of the video conference and not with how many participants are in the video conference.

5. The method of claim 1, wherein the assigning further comprises:
assigning one output port (110) for each requested bit rate.

6. The method of claim 1, wherein the assigning further comprises:
assigning one output port (110) for each requested configuration.

7. The method of claim 1, wherein the assigning further comprises:
assigning one output port (110) for each requested resolution.

8. The method of claim 1, wherein the assigning further comprises:
assigning one output port (110) for each requested frame rate.

9. The method of claim 2, wherein the receiving endpoint uses a compression standard that is used for the single compressed video output signal.

10. The method of claim 2, wherein the receiving endpoint uses a bit rate that is used for the single compressed video output signal.

11. The method of claim 2, wherein the receiving endpoint uses a resolution that is used for the single compressed video output signal.

12. The method of claim 2, wherein the receiving endpoint uses a layout that is used for the single compressed video output signal.

13. The method of claim 2, wherein the receiving endpoint uses a frame rate that is used for the single compressed video output signal.

14. The method of claim 1, wherein the assigning further comprises:
assigning one input port (105) for each currently visible source thereby binding a resources allocation associated with a video processing device with layouts used by the video conference and not with how many participants are in the video conference.

15. The method of claim 2, wherein the output module (110) is dedicated to a layout in which the input module participates.

16. The method of claim 1 further comprising:
routing multiple compressed video input signals from a first set of endpoints to multiple input modules (105), each compressed video input signal being routed from one of the first set of endpoints to one of the multiple input modules (105); the multiple compressed video input signals, the multiple input modules (105) and the first set of endpoints having a one to one correspondence;
processing the multiple compressed video input signals using the multiple input modules (105) thereby forming decoded video data, each input module (105) processing a different one of the multiple compressed input signals;
routing the decoded video data from the input modules (105) to multiple output modules (110), each output module (110) may have decoded video data from multiple input modules routed thereto;
processing the decoded video data to form compressed video output signals, each output module forming one compressed video output signal; and
transferring the compressed video output signals from the multiple output modules (110) to a second set of endpoints, each video output module (110) having the single compressed video output signal transferred to one or more endpoints of the second set of endpoints.

17. The method of claim 16, wherein the first set of endpoints and second set of endpoints are identical as to which endpoints are included.

18. A processor-based video conference system comprising a medium storing instructions for causing the processor to:
allow a conference moderator of a multipoint video conference to define a conference profile, the conference profile comprising, in particular, one or more of bit rate, resolution, compression standards, types of layouts, and the amount or number of different layouts in the conference;
offering a selection of several levels of service to the conference moderator on the basis of the conference profile, wherein different levels of service require different amounts of video resources, wherein the levels of service determine the number of input ports (105) and the number of output ports (110) used for the entire multipoint video conference;
allow the conference moderator to select a level of service; and
assign one or more video resources to the multipoint video conference based on the defined conference profile and the selected level of service,
wherein the one or more video resources is selected from the group of input port (105), output port (110), slim port and fat port, the slim port comprising a single input module and a single output module, the fat port comprising a plurality of input modules and a single output module.

## Patentansprüche

1. Verfahren zum Zuteilen von Videobetriebsmitteln zu einer Mehrpunkt-Videokonferenz, wobei das Verfahren aufweist:
Definieren eines Konferenzprofils durch einen Konferenzmoderator, wobei das Konferenzprofil insbesondere eine oder mehrere aus Bitrate, Auflösung, Kompressionsstandards, Arten von Layouts und Menge oder Anzahl von verschiedenen Layouts in der Konferenz aufweist;
Anbieten einer Auswahl von mehreren Dienstebenen an den Konferenzmoderator durch eine Videoverarbeitungsvorrichtung auf der Basis des Konferenzprofils, wobei verschiedene Dienstebenen verschiedene Mengen an Videobetriebsmitteln erfordern, wobei die Dienstebenen die Anzahl von Eingangsports (105) und die Anzahl von Ausgangsports (110), die für die ganze Mehrpunkt-Videokonferenz verwendet werden, festlegen;
Auswählen einer Dienstebene durch den Konferenzmoderator; und
Zuweisen von einem oder mehreren Videobetriebsmitteln zu der Mehrpunkt-Videokonferenz durch die Videoverarbeitungsvorrichtung auf der Basis des definierten Konferenzprofils und der ausgewählten Dienstebene,
wobei das eine oder die mehreren Videobetriebsmittel aus der Gruppe ausgewählt sind, die aus einem Eingangsport (105), einem Ausgangsport (110), einem schlanken Port und einem dicken Port besteht, wobei der schlanke Port ein einzelnes Eingangsmodul und ein einzelnes Ausgangsmodul aufweist und der dicke Port eine Vielzahl von Eingangsmodulen und ein einzelnes Ausgangsmodul aufweist.

2. Verfahren nach Anspruch 1, das ferner aufweist:
Leiten eines komprimierten Videoeingangssignals eines Eingangsendpunkts zu einem Eingangsmodul (105);
Verarbeiten des komprimierten Videoeingangssignals unter Verwendung des Eingangsmoduls (105);
Leiten von decodierten Videodaten eines Satzes von Eingangsmodulen (105) zu Ausgangsmodulen (110);
Verarbeiten der decodierten Videodaten zum Erzeugen eines einzelnen komprimierten Videoausgangssignals unter Verwendung eines Ausgangsmoduls der Ausgangsmodule (110); und
Übertragen des einzelnen komprimierten Videoausgangssignals zu einem Empfangsendpunkt.

3. Verfahren nach Anspruch 1, wobei das Anbieten einer Auswahl von Dienstebenen mindestens einen Parameter berücksichtigt, der aus einer Gruppe von Parametern ausgewählt ist, die aus folgendem besteht: wie viele verschiedene Kompressionsstandards an der Videokonferenz beteiligt sind, wie viele verschiedene Auflösungen an der Videokonferenz beteiligt sind, welche Art von Konfiguration bei der Videokonferenz verwendet wird, wie viele Arten von Konfigurationen bei der Videokonferenz in Gebrauch sind, wie viele verschiedene Bitraten bei der Videokonferenz in Gebrauch sind und wie viele verschiedene Bildwiederholraten bei der Videokonferenz in Gebrauch sind.

4. Verfahren nach Anspruch 1, wobei das Zuweisen ferner aufweist:
Zuweisen eines Ausgangsports (110) für jeden angeforderten Kompressionsstandard, wodurch eine Betriebsmittelzuteilung, die einer Videoverarbeitungsvorrichtung zugeordnet ist, an die Bedürfnisse der Videokonferenz und nicht daran, wie viele Teilnehmer sich in der Videokonferenz befinden, gebunden wird.

5. Verfahren nach Anspruch 1, wobei das Zuweisen ferner aufweist:
Zuweisen eines Ausgangsports (110) für jede angeforderte Bitrate.

6. Verfahren nach Anspruch 1, wobei das Zuweisen ferner aufweist:
Zuweisen eines Ausgangsports (110) für jede angeforderte Konfiguration.

7. Verfahren nach Anspruch 1, wobei das Zuweisen ferner aufweist:
Zuweisen eines Ausgangsports (110) für jede angeforderte Auflösung.

8. Verfahren nach Anspruch 1, wobei das Zuweisen ferner aufweist:
Zuweisen eines Ausgangsports (110) für jede angeforderte Bildwiederholrate.

9. Verfahren nach Anspruch 2, wobei der Empfangsendpunkt einen Kompressionsstandard verwendet, der für das einzelne komprimierte Videoausgangssignal verwendet wird.

10. Verfahren nach Anspruch 2, wobei der Empfangsendpunkt eine Bitrate verwendet, die für das einzelne komprimierte Videoausgangssignal verwendet wird.

11. Verfahren nach Anspruch 2, wobei der Empfangsendpunkt eine Auflösung verwendet, die für das einzelne komprimierte Videoausgangssignal verwendet wird.

12. Verfahren nach Anspruch 2, wobei der Empfangsendpunkt ein Layout verwendet, das für das einzelne komprimierte Videoausgangssignal verwendet wird.

13. Verfahren nach Anspruch 2, wobei der Empfangsendpunkt eine Bildwiederholrate verwendet, die für das einzelne komprimierte Videoausgangssignal verwendet wird.

14. Verfahren nach Anspruch 1, wobei das Zuweisen ferner aufweist:
Zuweisen eines Eingangsports (105) für jede gegenwärtig sichtbare Quelle, wodurch eine Betriebsmittelzuteilung, die einer Videoverarbeitungsvorrichtung zugeordnet ist, an Layouts, die von der Videokonferenz verwendet werden, und nicht daran, wie viele Teilnehmer sich in der Videokonferenz befinden, gebunden wird.

15. Verfahren nach Anspruch 2, wobei das Ausgangsmodul (110) für ein Layout zweckbestimmt ist, an dem das Eingangsmodul teilnimmt.

16. Verfahren nach Anspruch 1, das ferner aufweist:
Leiten von mehreren komprimierten Videoeingangssignalen von einem ersten Satz von Endpunkten zu mehreren Eingangsmodulen (105), wobei jedes komprimierte Videoeingangssignal von einem des ersten Satzes von Endpunkten zu einem der mehreren Eingangsmodule (105) geleitet wird; wobei die mehreren komprimierten Videoeingangssignale, die mehreren Eingangsmodule (105) und der erste Satz von Endpunkten eine Eins-zu-Eins-Entsprechung aufweisen;
Verarbeiten der mehreren komprimierten Videoeingangssignale unter Verwendung der mehreren Eingangsmodule (105), wodurch decodierte Videodaten erzeugt werden, wobei jedes Eingangsmodul (105) ein anderes der mehreren komprimierten Eingangssignale verarbeitet;
Leiten der decodierten Videodaten von den Eingangsmodulen (105) zu mehreren Ausgangsmodulen (110), wobei zu jedem Ausgangsmodul (110) decodierte Videodaten von mehreren Eingangsmodulen geleitet werden können;
Verarbeiten der decodierten Videodaten, um komprimierte Videoausgangssignale zu erzeugen, wobei jedes Ausgangsmodul ein komprimiertes Videoausgangssignal erzeugt; und
Übertragen der komprimierten Videoausgangssignale von den mehreren Ausgangsmodulen (110) zu einem zweiten Satz von Endpunkten, wobei bei jedem Videoausgangsmodul (110) das einzelne komprimierte Videoausgangssignal zu einem oder mehreren Endpunkten des zweiten Satzes von Endpunkten übertragen wird.

17. Verfahren nach Anspruch 16, wobei der erste Satz von Endpunkten und der zweite Satz von Endpunkten hinsichtlich dessen, welche Endpunkte enthalten sind, identisch sind.

18. Videokonferenzsystem auf Prozessorbasis mit einem Medium, das Befehle speichert, um zu veranlassen, dass der Prozessor:
einem Konferenzmoderator einer Mehrpunkt-Videokonferenz ermöglicht, ein Konferenzprofil zu definieren, wobei das Konferenzprofil insbesondere eine oder mehrere aus Bitrate, Auflösung, Kompressionsstandards, Arten von Layouts und Menge oder Anzahl von verschiedenen Layouts in der Konferenz aufweist,
eine Auswahl von mehreren Dienstebenen dem Konferenzmoderator auf der Basis des Konferenzprofils anbietet, wobei verschiedene Dienstebenen verschiedene Mengen an Videobetriebsmitteln erfordern, wobei die Dienstebenen die Anzahl von Eingangsports (105) und die Anzahl von Ausgangsports (110), die für die ganze Mehrpunkt-Videokonferenz verwendet werden, festlegen;
dem Konferenzmoderator ermöglicht, eine Dienstebene auszuwählen; und
ein oder mehrere Videobetriebsmittel der Mehrpunkt-Videokonferenz auf der Basis des definierten Konferenzprofils und der ausgewählten Dienstebene zuweist,
wobei das eine oder die mehreren Videobetriebsmittel aus der Gruppe ausgewählt sind, die aus einem Eingangsport (105), einem Ausgangsport (110), einem schlanken Port und einem dicken Port besteht, wobei der schlanke Port ein einzelnes Eingangsmodul und ein einzelnes Ausgangsmodul aufweist und der dicke Port eine Vielzahl von Eingangsmodulen und ein einzelnes Ausgangsmodul aufweist.

## Revendications

1. Procédé d'allocation de ressources vidéo à destination d'une conférence vidéo multipoint, le procédé comprenant :
la définition d'un profil de conférence par un modérateur de conférence, le profil de conférence comprenant, en particulier, un ou plusieurs des éléments parmi le débit binaire, la résolution, les normes de compression, les types de présentations et la quantité ou le nombre de différentes présentations dans la conférence,
la fourniture par un dispositif de traitement vidéo d'une sélection de plusieurs niveaux de service au modérateur de conférence sur la base du profil de conférence, où différents niveaux de service exigent différentes quantités de ressources vidéo, où les niveaux de service déterminent le nombre de ports d'entrée (105) et le nombre de ports de sortie (110) utilisés pour toute la conférence vidéo multipoint,
la sélection d'un niveau de service par le modérateur de conférence, et
l'affectation par le dispositif de traitement vidéo d'une ou plusieurs ressources vidéo à destination de la conférence vidéo multipoint sur la base des profils de conférence définis et du niveau sélectionné de service,
où les une ou plusieurs ressources vidéo sont sélectionnées à partir du groupe constitué du port d'entrée (105), du port de sortie (110), le port mince et le port gros, le port mince comprenant un seul module d'entrée et un seul module de sortie, le port gros comprenant une pluralité de modules d'entrée et un seul module de sortie.

2. Procédé selon la revendication 1 comprenant en outre :
l'acheminement d'un signal d'entrée vidéo compressé d'un point d'extrémité d'entrée vers un module d'entrée (105),
le traitement du signal d'entrée vidéo compressé en utilisant le module d'entrée (105),
l'acheminement des données vidéo décodées d'un ensemble de modules d'entrée (105) vers des modules de sortie (110),
le traitement des données vidéo décodées pour former un unique signal de sortie vidéo compressé en utilisant un seul module de sortie des modules de sortie (110), et
le transfert de l'unique signal de sortie vidéo compressé vers un point d'extrémité de réception.

3. Procédé selon la revendication 1, dans lequel la fourniture d'une sélection de niveaux de service prend en considération au moins un paramètre sélectionné parmi un groupe de paramètres constitués : du nombre de différentes normes de compression qui sont impliquées dans la conférence vidéo, du nombre de différentes résolutions qui sont impliquées dans la conférence vidéo, du type de configuration qui est utilisé dans la conférence vidéo, du nombre de types de configurations qui sont utilisées dans la conférence vidéo, du nombre de différents débits binaires qui sont utilisés dans la conférence vidéo, et du nombre de différents taux de trames qui sont utilisés dans la conférence vidéo.

4. Procédé selon la revendication 1, dans lequel l'affectation comprend en outre :
l'affectation d'un port de sortie (110) pour chaque norme de compression demandée, en liant de cette manière une allocation de ressources associée à un dispositif de traitement vidéo aux besoins de la conférence vidéo et pas au nombre de participants qui sont présents lors de la conférence vidéo.

5. Procédé selon la revendication 1, dans lequel l'affectation comprend en outre :
l'affectation d'un port de sortie (110) pour chaque débit binaire demandé.

6. Procédé selon la revendication 1, dans lequel l'affectation comprend en outre :
l'affection d'un port de sortie (110) pour chaque configuration demandée.

7. Procédé selon la revendication 1, dans lequel l'affectation comprend en outre :
l'affection d'un port de sortie (110) pour chaque résolution demandée.

8. Procédé selon la revendication 1, dans lequel l'affectation comprend en outre :
l'affection d'un port de sortie (110) pour chaque taux de trame demandé.

9. Procédé selon la revendication 2, dans lequel le point d'extrémité de réception utilise une norme de compression qui est utilisée pour l'unique signal de sortie vidéo compressé.

10. Procédé selon la revendication 2, dans lequel le point d'extrémité de réception utilise un débit binaire qui est utilisé pour l'unique signal de sortie vidéo compressé.

11. Procédé selon la revendication 2, dans lequel le point d'extrémité de réception utilise une résolution qui est utilisée pour l'unique signal de sortie vidéo compressé.

12. Procédé selon la revendication 2, dans lequel le point d'extrémité de réception utilise une présentation qui est utilisée pour l'unique signal de sortie vidéo compressé.

13. Procédé selon la revendication 2, dans lequel le point d'extrémité de réception utilise un taux de trame qui est utilisé pour l'unique signal de sortie vidéo compressé.

14. Procédé selon la revendication 1, dans lequel l'affectation comprend en outre :
l'affectation d'un port d'entrée (105) pour chaque source actuellement visible, en liant de cette manière une allocation de ressources associée à un dispositif de traitement vidéo aux présentations utilisées par la conférence vidéo et non pas au nombre de participants présents lors de la conférence vidéo.

15. Procédé selon la revendication 2, dans lequel le module de sortie (110) est réservé à une présentation à laquelle le module d'entrée participe.

16. Procédé selon la revendication 1 comprenant en outre :
l'acheminement de multiples signaux d'entrée vidéo compressés à partir d'un premier ensemble de points d'extrémité vers de multiples modules d'entrée (105), chaque signal d'entrée vidéo compressé étant acheminé à partir d'un point d'extrémité du premier ensemble de points d'extrémité vers un module des multiples modules d'entrée (105), les multiples signaux d'entrée vidéo compressés, les multiples modules d'entrée (105) et le premier ensemble de points d'extrémité présentant une correspondance biunivoque,
le traitement de multiples signaux d'entrée vidéo compressés en utilisant les multiples modules d'entrée (105), en formant de cette manière des données vidéo décodées, chaque module d'entrée (105) traitant un signal différent parmi les multiples signaux d'entrée compressés,
l'acheminement des données vidéo décodées depuis les modules d'entrée (105) vers les multiples modules de sortie (110), chaque module de sortie (110) peut comporter des données vidéo décodées provenant de multiples modules d'entrée acheminées vers celui-ci,
le traitement des données vidéo décodées pour former des signaux de sortie vidéo compressés, chaque module de sortie formant un signal de sortie vidéo compressé, et
le transfert des signaux de sortie vidéo compressés des multiples modules de sortie (110) vers un deuxième ensemble de points d'extrémité, chaque module de sortie vidéo (110) comportant l'unique signal de sortie vidéo compressé transféré vers un ou plusieurs points d'extrémité du deuxième ensemble de points d'extrémité.

17. Procédé selon la revendication 16, dans lequel le premier ensemble de points d'extrémité et le deuxième ensemble de points d'extrémité sont identiques quels que soient les points d'extrémité qui sont compris.

18. Système de conférence vidéo géré par processeur comprenant un support mémorisant des instructions pour amener le processeur à :
permettre à un modérateur de conférence d'une conférence vidéo multipoint de définir un profil de conférence, le profil de conférence comprenant, en particulier, un ou plusieurs éléments parmi le débit binaire, la résolution, les normes de compression, les types de présentations et la quantité ou le nombre de différentes présentations dans la conférence,
fournir une sélection de plusieurs niveaux de service au modérateur de conférence sur la base du profil de conférence, où différents niveaux de service exigent différentes quantités de ressources vidéo, où les niveaux de service déterminent le nombre de ports d'entrée (105) et le nombre de ports de sortie (110) utilisés pour toute la conférence vidéo multipoint,
permettre au modérateur de conférence de sélectionner un niveau de service et
affecter une ou plusieurs ressources vidéo à destination de la conférence vidéo multipoint sur la base du profil de conférence défini et du niveau sélectionné de service ,
où les une ou plusieurs ressources vidéo sont sélectionnées à partir du groupe constitué du port d'entrée (105), du port de sortie (110), un port mince et un port gros, le port mince comprenant un seul module d'entrée et un seul module de sortie, le port gros comprenant une pluralité de modules d'entrée et un seul module de sortie.
